(19) **Europäisches Patentamt European Patent Office Office européen des brevets**

(11) **EP 4 395 376 B1**

(12) **EUROPEAN PATENT SPECIFICATION**

(45) Date of publication and mention of the grant of the patent:
**04.03.2026 Bulletin 2026/10**

(21) Application number: **21958910.8**

(22) Date of filing: **30.09.2021**

(51) International Patent Classification (IPC):
*H04W 4/46* (2018.01)    *H04W 72/04* (2023.01)
*H04W 72/56* (2023.01)    *H04W 72/25* (2023.01)
*H04W 92/18* (2009.01)

(52) Cooperative Patent Classification (CPC):
**H04W 72/25; H04W 4/46;** H04W 72/56;
H04W 92/18

(86) International application number:
**PCT/CN2021/122229**

(87) International publication number:
**WO 2023/050338 (06.04.2023 Gazette 2023/14)**

(54) **WIRELESS COMMUNICATION METHOD AND TERMINAL DEVICE**

DRAHTLOSKOMMUNIKATIONSVERFAHREN UND ENDGERÄTEVORRICHTUNG

PROCÉDÉ DE COMMUNICATION SANS FIL ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2024 Bulletin 2024/27**

(73) Proprietor: **GUANGDONG OPPO MOBILE TELECOMMUNICATIONS CORP., LTD.**
**Dongguan, Guangdong 523860 (CN)**

(72) Inventors:
• **ZHANG, Shichang**
  **Dongguan, Guangdong 523860 (CN)**
• **ZHAO, Zhenshan**
  **Dongguan, Guangdong 523860 (CN)**
• **LIN, Huei-Ming**
  **Taipei Taiwan 111 (TW)**

(74) Representative: **Taor, Simon Edward William et al**
**Venner Shipley LLP**
**200 Aldersgate**
**London EC1A 4HD (GB)**

(56) References cited:
**WO-A1-2020/107349    CN-A- 109 691 146**
**CN-A- 112 640 499    US-A1- 2022 030 598**

• **NTT DOCOMO ET AL: "Resource allocation for reliability and latency enhancements", vol. RAN WG1, no. e-Meeting; 20210816 - 20210827, 6 August 2021 (2021-08-06), XP052033676, Retrieved from the Internet <URL:https://ftp.3gpp.org/tsg_ran/WG1_RL1/TSGR1_106-e/Docs/R1-2107880.zip R1-2107880_DCM_SL RA reliablity latency.docx> [retrieved on 20210806]**
• **MITSUBISHI ELECTRIC: "Inter-UE coordination for enhanced resource allocation", vol. RAN WG1, no. e-Meeting; 20210816 - 20210827, 2 August 2021 (2021-08-02), XP052044138, Retrieved from the Internet <URL:https://ftp.3gpp.org/tsg_ran/WG1_RL1/TSGR1_106-e/Docs/R1-2106570.zip R1-2106570 - RAN1#106-NRSLenh_UEassistance_Mitsubishi.docx> [retrieved on 20210802]**
• **NTT DOCOMO, INC.: "Resource allocation for reliability and latency enhancements", 3GPP TSG RAN WG1 #106-E, R1-2107880, 6 August 2021 (2021-08-06), XP052033676**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 395 376 B1

**Description**

TECHNICAL FIELD

Embodiments of the present disclosure relate to the field of communications, and in particular to, a wireless communication method, a terminal device and a computer-readable storage medium.

BACKGROUND

In a New Radio Vehicle to Everything (NR-V2X) system, two transmission modes are defined: a first mode and a second mode. In the first mode, transmission resources for a terminal are allocated by a network, and the terminal transmits data on the sidelink according to resources allocated by the network. In the second mode, the terminal selects a resource from a resource pool to perform data transmission.

In related art, a resource selection enhancement scheme is proposed. In the scheme, a terminal (e.g. a terminal A) indicates a detected resource conflict that occurs on a resource already used by another terminal (e.g. a terminal B) to the terminal B, or indicates a possible resource conflict that will occur on a resource to be used by the terminal B to the terminal B, so that the terminal B may perform a corresponding retransmission or perform resource reselection. However, if the terminal A determines that resources reserved by multiple terminals are overlapping, in this case, for the terminal A, how to determine a target terminal to which resource conflict indication is sent is an urgent problem to be solved.

WO 2020/107349 A1 discloses a method for resource collision resolution in a V2X direct communication scenario.

SUMMARY

The invention is set out in the appended set of claims.

BRIEF DESCRIPTION OF THE DRAWINGS

FIG. 1 is a schematic diagram of sidelink communication within a network coverage according to the present disclosure.
FIG. 2 is a schematic diagram of sidelink communication partly within a network coverage according to the present disclosure.
FIG. 3 is a schematic diagram of sidelink communication outside a network coverage according to the present disclosure.
FIG. 4 is a schematic diagram of unicast sidelink communication according to the present disclosure.
FIG. 5 is a schematic diagram of multicast sidelink communication according to the present disclosure.
FIG. 6 is a schematic diagram of broadcast sidelink communication according to the present disclosure.
FIG. 7 is a schematic diagram of structures of a Physical Sidelink Control Channel (PSCCH) frame and Physical Sidelink Shared Channel (PSSCH) frame according to the present disclosure.
FIG. 8 is a schematic diagram of a sidelink transmission based on the second mode.
FIG. 9 is a schematic diagram of another sidelink transmission based on the second mode.
FIG. 10 is a schematic interaction diagram of a wireless communication method according to an embodiment of the present disclosure.
FIG. 11 is a schematic diagram of a sidelink transmission according to an embodiment of the present disclosure.
FIG. 12 is a schematic block diagram of a terminal device according to an embodiment of the present disclosure.
FIG. 13 is a schematic block diagram of a communication device according to another embodiment of the present disclosure.
FIG. 14 is a schematic block diagram of a chip according to an embodiment of the present disclosure.

DETAILED DESCRIPTION

The technical schemes of the embodiments of the present disclosure would be clearly and completely described in conjunction with the accompanying drawings in the embodiments of the present disclosure. It is apparent that the described embodiments are only part of the embodiments of the present disclosure, not all the embodiments.

The technical scheme in the embodiments of the present disclosure may be applied to various communication systems, such as: a Global System Of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system for NR system, a LTE-based access to Unlicensed Spectrum (LTE-U) system, a NR-based access to Unlicensed Spectrum (NR-U) system, a Non-Terrestrial Networks (NTN) system, a Universal Mobile Telecommunication System (UMTS), a Wireless Local Area Network (WLAN), a Wireless Fidelity (Wi-Fi), a 5th-generation (5G) system or other communication systems.

Generally speaking, traditional communication systems support a limited number of connections and are easy to implement. However, with the development of communication technology, mobile communication systems will not only support traditional communication, but also support, for example, Device to Device (D2D) communication, Machine To Machine (M2M) communication, Machine Type Communication (MTC), Vehicle To Vehicle (V2V) communication, or V2X communication, etc. The embodiments of the present disclosure may also be applied to these communication systems.

Optionally, the communication system in the embodiments of the present disclosure may be applied to a Carrier Aggregation (CA) scenario, a Dual Connectivity (DC) scenario, and a Standalone (SA) network distribution scenario.

Optionally, the communication system in the embodiments of the present disclosure may be applied to an unlicensed spectrum, and the unlicensed spectrum may also be considered as a shared spectrum. Optionally, the communication system in the embodiments of the present disclosure may also be applied to a licensed spectrum, and the licensed spectrum may also be considered as a non-shared spectrum.

The embodiments of the present disclosure are described in connection with a network device and a terminal device. The terminal device may also be referred to as User Equipment (UE), an access terminal, a user unit, a user station, a mobile station, a remote station, a remote terminal, a mobile device, a user terminal, a terminal, a wireless communication device, a user agent or a user device, etc.

The terminal device may be a Station (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, etc.

In the embodiments of the present disclosure, the terminal device may be deployed on land, and include indoor or outdoor device, hand-held device, wearable device or vehicle-mounted device. The terminal device may also be deployed on the water (such as on the ships, etc.). The terminal device may also be deployed in the air (such as, in airplanes, in balloons and in satellites, etc.).

In the embodiments of the present disclosure, the terminal device may be a mobile phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example and not limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiments of the present disclosure, the network device may be a device configured to communicate with a mobile device, and the network device may be an access point (AP) in a WLAN, a Base Transceiver Station (BTS) in a GSM or CDMA, a NodeB (NB) in a WCDMA, an evolved Node B (eNB or eNodeB) in an LTE, a relay station or an access point, a vehicle-mounted device, a wearable device, a network device or a gNB in an NR network, a network device in a future evolved PLMN network or a network device in an NTN network, etc.

By way of example and not limitation, in the embodiments of the present disclosure, the network device may have mobility characteristics, for example, the network device may be a mobile device. Optionally, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide a service for a cell, and the terminal device communicates with the network device through transmission resources (e.g., frequency resources, or spectrum resources) used by the cell. The cell may be a cell corresponding to the network device (e.g., base station), and the cell may belong to a macro base station or a base station corresponding to a small cell. The small cell may include a metro cell, a micro cell, a Pico cell, a Femto cell, etc. These small cells have characteristics of small coverage and low transmission power, and the small cells are suitable for providing a high-speed data transmission service.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

Terms used in the embodiments of the present disclosure are used only for explanation of specific embodiments of the present disclosure and the terms are not intended to limit the present disclosure. The terms "first", "second" and the like in the description and claims of the present disclosure and the accompanying drawings are used to distinguish different objects and are not used to describe a particular sequence. Furthermore, the terms "including" and "having" and any variations thereof are intended to cover non-exclusive inclusion.

It is to be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspondence" may mean that there is a direct correspondence or an indirect correspondence between the two, may also mean that there is an association relationship between the two, and may also be a relationship between indication and being indicated, configuration and being configured, etc.

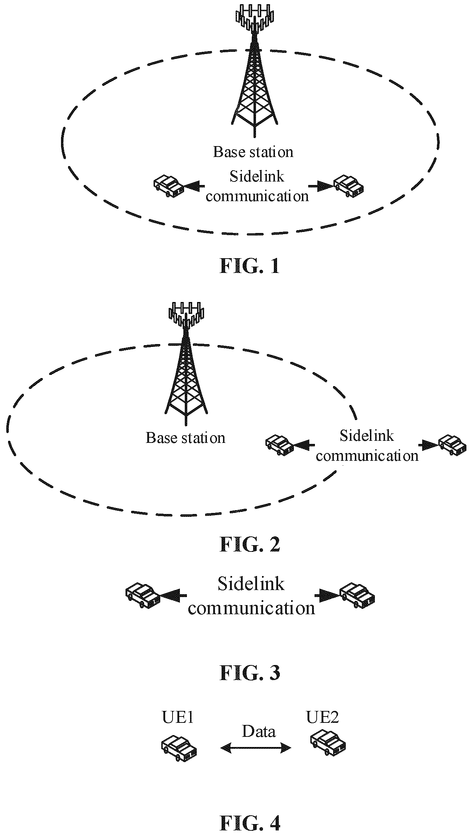

It is to be noted that in the sidelink communication, according to the network coverage situation where a terminal performing the communication is located, the sidelink communication may be divided into the sidelink communication within network coverage, as shown in FIG. 1; the sidelink communication partly within network coverage, as shown in FIG. 2; and the sidelink communication outside network coverage, as shown in FIG. 3.

In FIG. 1, in the sidelink communication within network coverage, all the terminals performing the sidelink communication are located within the coverage of the same base station, so that all the terminals are able to perform the sidelink communication, based on the same sidelink configuration, by receiving the configuration signaling from the base station.

In FIG. 2, in the situation of the sidelink communication partly within network coverage, a part of terminals performing sidelink communication are located within the coverage of the base station, and these terminals are able to receive the configuration signaling from the base station and perform the sidelink communication according to the configuration from the base station. Terminals located outside the network coverage are unable to receive the configuration signaling from the base station. In this case, the terminals outside the network coverage determine the sidelink configuration according to pre-configuration information and information carried in a Physical Sidelink Broadcast Channel (PSBCH) sent by the terminal located within the network coverage, so as to perform the sidelink communication.

In FIG. 3, for the sidelink communication outside network coverage, all terminals performing the sidelink communication are located outside the network coverage, and all terminals determine the sidelink configuration according to pre-configuration information to perform the sidelink communication.

It is to be noted that a device-to-device communication is a sidelink transmission technology based on Device to Device (D2D), which is different from the traditional cellular system in which communication data is received or sent by a base station. Therefore, the device-to-device communication has higher spectrum efficiency and lower transmission delay. In the Vehicle-To-Everything (V2X) system, terminal-to-terminal direct communication is adopted. The 3GPP defines two transmission modes: the first mode and the second mode. The embodiments of the present disclosure may be applied to the first mode and/or the second mode.

In the first mode, transmission resources of the terminal are allocated by the base station, and the terminal sends data on the sidelink according to the resources allocated by the base station. The base station may allocate, to the terminal, resources for single transmission or semi-static transmission. As shown in FIG. 1, the terminal is located within the network coverage, and the network allocates the transmission resources for sidelink transmission to the terminal.

In the second mode, the terminal selects, in the resource pool, a resource for data transmission. As shown in FIG. 3, the terminal is located outside the coverage of the cell, and the terminal autonomously selects transmission resources in a pre-configured resource pool to perform the sidelink transmission. Optionally, as shown in FIG. 1, the terminal autonomously selects transmission resources from a resource pool configured by the network to perform the sidelink transmission.

The resource selection in the second mode is performed according to following steps 1 to 2.

In step 1, the terminal takes all available resources in a resource selection window as a resource set A.

If the terminal sends data in certain slots within a sensing window and does not perform sensing, all resources in slots corresponding to these certain slots in the resource selection window are excluded. The terminal determines the slots corresponding to these certain slots in the resource selection window by using a value set of the "resource reservation period" field in its used resource pool configuration.

If a terminal senses a Physical Sidelink Control Channel (PSCCH) in the resource sensing window, the terminal measures a Reference Signal Received Power (RSRP) of the PSCCH or an RSRP of a Physical Sidelink Shared Channel (PSSCH) scheduled by the PSCCH. If the measured RSRP is greater than an SL-RSRP threshold, and reserved resources determined according to resource reservation information in the SCI transmitted in the PSCCH are in the resource selection window, the reserved resources are excluded from the set A. If a ratio of a number of remaining resources in the resource set A to the total number of resources in the resource set A before the resource exclusion is less than X%, the SL-RSRP threshold is increased by 3 dB, and step 1 is performed again. The possible values of X are {20, 35, 50}, and the terminal determines a parameter X from the value set according to a priority of the data to be sent. Moreover, the SL-RSRP threshold is associated with a priority carried in the PSCCH sensed by the terminal and a priority of the data to be sent by the terminal. The terminal takes the remaining resources in the resource set A subjected to the resource exclusion as a candidate resource set.

In step 2, the terminal randomly selects several resources from the candidate resource set as transmission resources for its initial transmission and retransmission.

In NR-V2X, autonomous driving is supported, so higher requirements are put forward for data interaction between vehicles, such as higher throughput, lower delay, higher reliability, larger coverage and more flexible resource allocation.

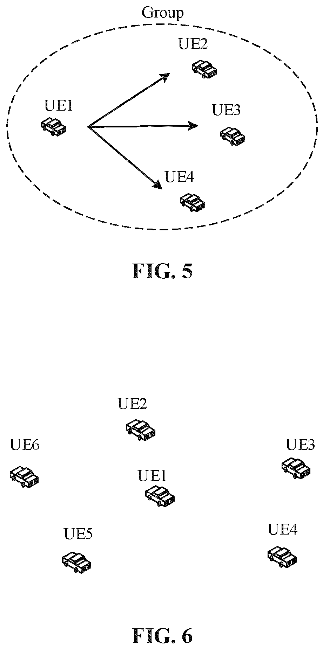

In LTE-V2X, the broadcast transmission mode is supported, and in NR-V2X, the unicast transmission mode and the multicast transmission mode are introduced. For the unicast transmission, there is only one terminal at the receiving end, as shown in FIG. 4, the unicast transmission is performed between UE1 and UE2. For the multicast transmission, the receiving end includes all terminals in a communication group or all terminals within a certain transmission distance. As shown in FIG. 5, UE1, UE2, UE3 and UE4 form a communication group, in which UE1 sends data, and other terminals in the group are the terminals at the receiving end. For the broadcast transmission mode, the terminal at the receiving end is any one terminal around the terminal at the sending end. As shown in FIG. 6, UE1 is the terminal at the sending end, and other terminals around UE1, i.e., UE2 to UE6, are all terminals at the receiving end.

The resource pool is introduced into the sidelink transmission system. The socalled resource pool is the set of transmission resources, whether the transmission resources are configured by the network or the transmission resources are selected by the terminal independently, the transmission resources are all resources in the resource pool. The resource pool may be pre-configured or may be configured by the network, and one or more resource pools may be configured. The resource pool is divided into the sending resource pool and the receiving resource pool. The transmission resources in the resource pool are used for sending sidelink data; and the terminal receives sidelink data on the transmission resources in the resource pool.

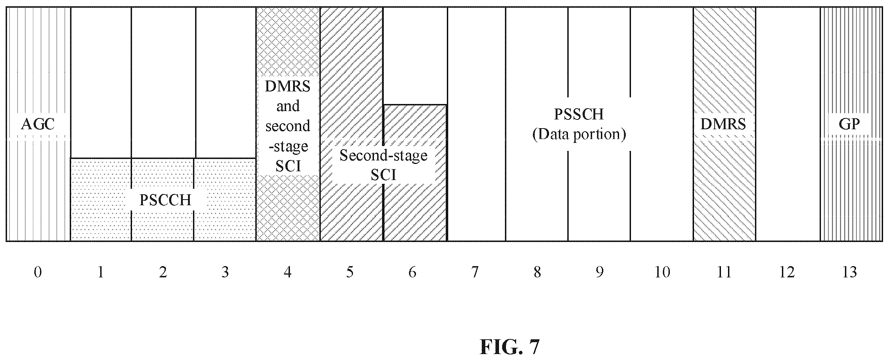

Two-stage Sidelink Control Information (SCI) is introduced into the NR-V2X. The first-stage SCI is carried in the PSCCH and is used for indicating information about the transmission resources of the PSSCH, reservation resource information, Modulation and Coding Scheme (MCS) level, priority, etc. The second-stage SCI is sent in the resources of the PSSCH and demodulated by using the Demodulation Reference Signal (DMRS) of the PSSCH. The second-stage SCI is used for indicating information used for data demodulation, such as, the Source Identity (ID), a Destination ID, a Hybrid Automatic Repeat reQuest (HARQ) ID, a New Data Indicator (NDI). The second-stage SCI is started to be mapped at the first DMRS symbol of the PSSCH, and firstly mapped in frequency domain and then mapped in time domain. As shown in FIG. 7, the PSCCH occupies three symbols (i.e., a symbol 1, a symbol 2 and a symbol 3), the DMRS of the PSSCH occupies a symbol 4 and a symbol 11, and the second-stage SCI is mapped at the symbol 4 and multiplexed with the DMRS frequency division on the symbol 4. The second-stage SCI is mapped to the symbol 4, the symbol 5 and the symbol 6. The resource occupied by the second-stage SCI depends on the number of bits of the second-stage SCI.

In the NR-V2X, the Physical Sidelink Feedback Channel (PSFCH) with a sequence type is supported, and is called PSFCH format 0. This type of the PSFCH occupies one Physical Resource Block (PRB) in the frequency domain and one Orthogonal Frequency-Division Multiplexing (OFDM) symbol in the time domain. The adopted sequence type is the same as the PUCCH format 0. In one resource pool, PSFCH resources are configured in a period of 1 slot, 2 slots or 4 slots, and exist in the slot of the PSFCH resources, and the PSFCH resources are located on the last OFDM symbol available for sidelink transmission in the slot. However, in order to support the transceiver conversion and the Automatic Gain Control (AGC) adjustment, PSFCH symbols are preceded by two OFDM symbols for the transceiver conversion and the AGC adjustment respectively. In addition, the PSCCH transmission and the PSSCH transmission are not allowed on the above three OFDM symbols. In some scenarios, the PSFCH is only used for carrying HARQ feedback information, and the capacity of one PSFCH is one bit.

The transmission resources of the PSFCH are determined according to the time-frequency position of transmission resources of the PSSCH corresponding to the PSFCH.

In the NR-V2X, the following two manners for determining the resources of the PSFCH are supported, and the specific manner for determining the resources of the PSFCH is configured according to high-layer signaling.

In the first manner, the transmission resources of the PSFCH are determined according to the first sub-channel of the frequency-domain resources of the PSSCH.

In the second manner, the transmission resources of the PSFCH are determined according to all sub-channels occupied by the frequency-domain resources of the PSSCH.

In the first manner for determining the resources, since the transmission resources of the PSFCH are determined according to only the first sub-channel occupied by the PSSCH, the number of feedback resources of PSFCH corresponding to the PSSCH is fixed regardless of how many sub-channels occupied by the PSSCH. In the second manner, the number of the transmission resources of the PSFCH is determined according to the number of the sub-channels occupied by the PSSCH, so that the more sub-channels occupied by the PSSCH, the more transmission resources of the PSFCH. The second manner is more suitable for scenarios where more sidelink HARQ feedback resources are required, for example, the second type of the sidelink HARQ feedback manner in multicast.

The PSFCH transmission resource set $R_{\text{PRB,CS}}^{\text{PSFCH}}$ corresponding to the PSSCH may be determined according to the slot and the sub-channel for sending the PSSCH. The indexes of the transmission resources of the PSFCH in the resource set are determined according to an ascending order of Resource Blocks (RBs) firstly and then according to an ascending order of Cyclic Shift (CS) pairs. Furthermore, in the resource set, the transmission resources of the PSFCH are determined by the following formula: $\left( P_{ID} + M_{ID} \right) \bmod R_{\text{PRB,CS}}^{\text{PSFCH}}$ .

Where, $P_{ID}$ represents the ID information of the sending end, i.e. the source ID of the UE at the sending end carried in the SCI; and for the sidelink HARQ feedback manner for the unicast or NACK-only multicast, $M_{ID} = 0$, and for the sidelink HARQ feedback manner for the ACK/NACK multicast, $M_{ID}$ represents the group ID of the UE at the receiving end configured by a high layer.

In the NR-V2X, the PSFCH resources are configured by sidelink PSFCH configuration signaling (SL-PSFCH-Config-r16), including following parameters. A sidelink PSFCH configuration period (sl-PSFCH-Period-r16) is used for configuring the period of the PSFCH resources. A sidelink PSFCH Resource Block (RB) set (sl-PSFCH-RB-Set-r16) is used for configuring the PRBs available for the PSFCH transmission on the OFDM symbol where the PSFCH resources are located. The number of sidelink multiplexing Cyclic Shift (CS) pairs (sl-NumMuxCS-Pair-r16) is used for configuring the number of CSs of the PFSCH sequence allowed in one PRB. A sidelink PSFCH time gap (sl-MinTimeGapPSFCH-r16) is used for configuring the minimum time gap between the PSFCH and the PSSCH associated with the PSFCH. A sidelink PSFCH hopping ID (sl-PSFCH-HopID-r16) is used for configuring a frequency hopping ID of the PSFCH that is used for determining the PSFCH sequence. A sidelink PSFCH candidate resource type (sl-PSFCH-CandidateResourceType-r16) is used for configuring a manner of determining the PSFCH candidate resources.

```
SL-PSFCH-Config-r16 ::=        SEQUENCE {
    sl-PSFCH-Period-r16        ENUMERATED {sl0, sl1, sl2, sl4}
OPTIONAL,   -- Need M
```

```
         sl-PSFCH-RB-Set-r16              BIT STRING (SIZE (10..275))

OPTIONAL,  -- Need M

         sl-NumMuxCS-Pair-r16             ENUMERATED {n1, n2, n3, n6}

OPTIONAL,  -- Need M

         sl-MinTimeGapPSFCH-r16           ENUMERATED {sl2, sl3}

OPTIONAL,  -- Need M

         sl-PSFCH-HopID-r16               INTEGER (0..1023)

OPTIONAL,  -- Need M

         sl-PSFCH-CandidateResourceType-r16   ENUMERATED {startSubCH,
allocSubCH}                        OPTIONAL,  -- Need M

         ...

      }
```

In the transmission manner of the second mode, the terminal randomly selects the transmission resources in the resource pool or selects the transmission resources according to a sensing result. This resource selection manner can avoid the interference between terminals to a certain extent, but still has problems of hidden node, half-duplex, exposed node and power consumption.

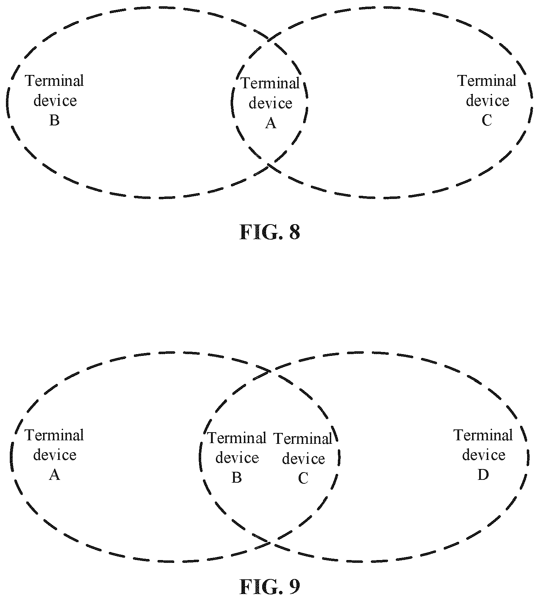

For the problem of hidden node, as shown in FIG. 8, the terminal B selects resources according to sensing, and sends sidelink data to terminal A by using these resources. Since terminal B and terminal C are far away from each other and cannot sense each other's transmission. Therefore, the terminal B and the terminal C may select the same transmission resources, and the data sent by the terminal C will cause interference to the data sent by the terminal B, which is the hidden node problem.

For the problem of half-duplex, when a terminal selects transmission resources through sensing, if the terminal sends sidelink data on a certain slot in the sensing window, due to the limitation of the half-duplex, the terminal cannot receive data sent by other terminals and have no sensing result on the certain slot. Therefore, when the terminal excludes resources, the terminal will exclude all resources corresponding to the certain slot in the selection window to avoid interference with other terminals. Due to the limitation of half-duplex, the terminal excludes many resources that do not need to be excluded.

For the problem of exposed node, as shown in FIG. 9, both the sending terminal B and the sending terminal C can monitor each other, but the target receiving terminal A of the sending terminal B is far away from the sending terminal C, and the target receiving terminal D of the sending terminal C is far away from the sending terminal B. In this case, even if the sending terminal B and the sending terminal C use the same time-frequency resources, the receptions of their respective target receiving terminals A and D will not be affected. However, since a geographical position of the terminal B is close to a geographical position of terminal C, the signal received power of one terminal detected by an opposite terminal during the sensing process may be very high. Therefore, the terminals B and C will select orthogonal time-frequency resources, which may eventually lead to the decline of resource utilization efficiency.

For the problem of power consumption, in the sensing process, the terminal needs to continuously sense resources to determine which resources are available, and the terminal needs to consume a lot of energy to continuously sense the resources, which is not a problem for a vehicle-mounted terminal, because the vehicle-mounted terminal is provided with a power supply device; but for a handheld terminal, excessive energy consumption will lead to power off of the terminal soon. Therefore, how to reduce the energy consumption of the terminal is also a problem that needs to be considered in the process of resource selection.

Based on the above technical problems, a resource selection enhancement scheme is proposed. One terminal (UE-A) sends a reference resource set to another terminal (UE-B) to assist the other terminal in resource selection. The reference resource set may be an available resource set obtained by the UE-A according to the resource sensing result or an indication from the base station, etc., or may be determined according to the detected SCI. The reference resource set may be a resource set adaptable to be used by the UE-B, and when the UE-B selects a resource for sending sidelink data to the target receiving terminal, the resource may be preferentially selected from the available resource set, thereby improving the reliability of receiving the sidelink data by the target receiving terminal. Optionally, the resource set may also be a resource set not adaptable to be used by the UE-B, and when the UE-B selects the resource, the resources in the resource set are avoided to be selected, thereby avoiding the problems of hidden node, half-duplex, etc. The terminal undertaking the functions of the UE-A is called a resource coordination terminal.

Another resource selection enhancement scheme is that the UE-A indicates a detected resource conflict that occurs on a resource already used by the UE-B to the UE-B or indicates a possible resource conflict that will occur on a resource to be used by the UE-B to the UE-B, so that the UE-B may perform the corresponding retransmission or perform the resource reselection. However, if the UE-A determines that the resources reserved by the multiple terminals are overlapping, in this case, for the UE-A, how to determine the target terminal to which resource conflict indication is sent is an urgent problem to be solved.

The technical schemes of the present disclosure will be described in detail by specific embodiments below.

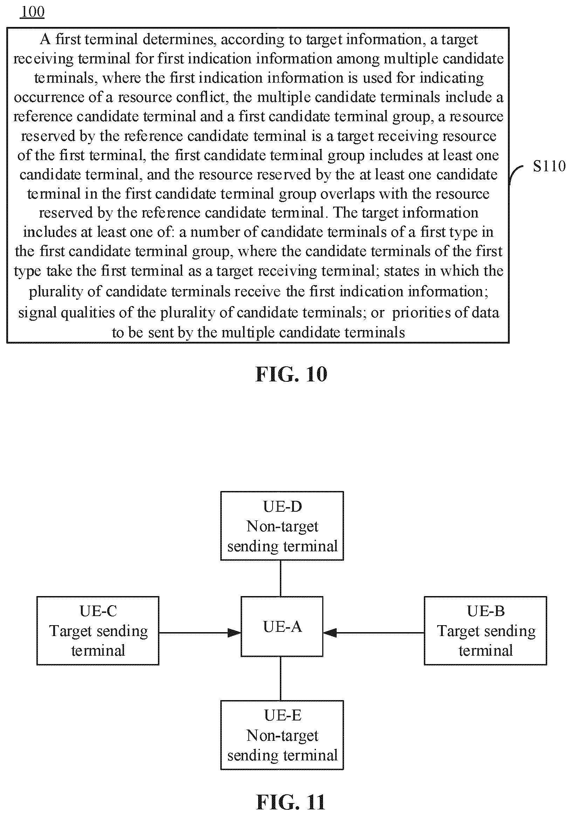

FIG. 10 is a schematic interaction diagram of a wireless communication method 100 according to an embodiment of the present disclosure. As shown in FIG. 10, the method 100 may include at least some of the following contents.

In operation S110, a first terminal determines, according to target information, a target receiving terminal for first indication information among multiple candidate terminals, where the first indication information is used for indicating occurrence of a resource conflict.

In some embodiments, the first indication information may also be replaced with a resource conflict indication, a resource collision indication, a resource overlap indication, or the like.

For ease of distinguishing and describing, the target receiving terminal for the first indication information is designated as the second terminal.

Furthermore, the first terminal may send the first indication information to the second terminal.

Optionally, after the first indication information is received, the second terminal may determine that the resource reserved by itself overlaps with the resource reserved by other terminals. In this case, the second terminal may perform the resource reselection. For example, when the resource reselection is performed, the resource for which the resource conflict occurs may be avoided to be selected, thereby reducing the probability of the resource conflict and improving the system performance.

In the embodiment of the present disclosure, the resources reserved by the multiple candidate terminals conflict, or the resources reserved by the multiple candidate terminals are overlapping.

In some embodiments, the multiple candidate terminals include a reference candidate terminal and a first candidate terminal group. The first candidate terminal group includes at least one candidate terminal, and the resource reserved by the at least one candidate terminal in the first candidate terminal group overlaps with the resource reserved by the reference candidate terminal.

In some embodiments, the reference candidate terminal is a target sending terminal from which the first terminal will receive data, or the first terminal will receive the sidelink data sent by the reference candidate terminal.

In other words, the resource reserved by the reference candidate terminal is the target receiving resource of the first terminal. The first terminal will receive the sidelink data, such as a Transport Block (TB), sent by the reference candidate terminal on the target receiving resource.

It is to be noted that, in the embodiment of the present disclosure, the first terminal determines the resource reserved by the reference candidate terminal as the target receiving resource, but it does not mean that the first terminal must receive data on the target receiving resource. For example, when the first terminal determines that the resource conflict indication is required to be sent to the reference candidate terminal, the reference candidate terminal may need to perform the resource reselection. In this case, the first terminal may not receive the data on the resource reserved by the reference candidate terminal.

It is to be understood that the fact that the resource reserved by the candidate terminal in the first candidate terminal group overlaps with the resource reserved by the reference candidate terminal may mean that the resource reserved by the candidate terminal is at least partially the same as the resource reserved by the reference candidate terminal.

For example, the resource reserved by the candidate terminal is exactly the same as that reserved by the reference candidate terminal.

For another example, the resource reserved by the candidate terminal is partially the same as the resource reserved by the reference candidate terminal. For example, the resource reserved by the candidate terminal includes the resource reserved by the reference candidate terminal, or the resource reserved by the reference candidate terminal includes the resource reserved by the candidate terminal, etc.

In some embodiments, the first candidate terminal group may include at least one candidate terminal of a first type and/or at least one candidate terminal of a second type. The candidate terminal of the first type takes the first terminal as the target receiving terminal, i.e., the candidate terminal of the first type is the target sending terminal corresponding to the first terminal. The candidate terminal of the second type does not take the first terminal as the target receiving terminal, i.e., the candidate terminal of the second type is not the target receiving terminal corresponding to the first terminal. In other words, the candidate terminal of the second type is a non-target sending terminal corresponding to the first terminal.

In some embodiments, the target information includes at least one of followings:

a number of candidate terminals of the first type in the first candidate terminal group;
states in which the multiple candidate terminals receive the first indication information;
signal qualities of the multiple candidate terminals; or
priorities of data to be sent by the multiple candidate terminals.

In some embodiments, the target receiving terminal for the resource conflict indication is determined according to the state in which the candidate terminal receives the first indication information. For example, the resource conflict indication is preferably sent to the candidate terminal receiving the resource conflict indication, or the resource conflict indication is avoided to be sent to the candidate terminal not receiving the resource conflict indication. In this way, it is beneficial to ensure that the candidate terminal that receives the resource conflict indication can perform the resource reselection, thereby reducing the probability of the resource conflict and improving the system performance.

In some embodiments, the signal quality of the candidate terminal may reflect the degree of interference to other terminals when the candidate terminal sends data. Therefore, the target receiving terminal for the resource conflict indication is determined according to the signal quality of the candidate terminal, for example, preferably sending the resource conflict indication to the candidate terminal with the optimal signal quality and avoiding sending the resource conflict indication to the candidate terminal with the poor signal quality, etc. In this way, it is beneficial to reduce the problem of the hidden node in the sidelink transmission.

In some embodiments, the target receiving terminal for the resource conflict indication is determined according to the priority of the data to be sent by the candidate terminal, for example, preferably sending the resource conflict indication to the candidate terminal corresponding to the data to be sent with the low priority, or avoiding sending the resource conflict indication to the candidate terminal corresponding to the data to be sent with the high priority. In this way, it is beneficial to ensure the transmission of the data with the high priority.

Optionally, the signal quality of the candidate terminal may include at least one of followings:
the Reference Signal Receiving Power (RSRP), the Reference Signal Receiving Quality (RSRQ), or the Signal to Interference plus Noise Ratio (SINR).

Optionally, the states in which the multiple candidate terminals receive the first indication information may include: whether the candidate terminal receives the first indication information sent by the target receiving terminal corresponding to the candidate terminal, or whether the candidate terminal receives the first indication information sent by other terminals (that are not limited to the target receiving terminal).

In some embodiments, the states in which the multiple candidate terminals receive the first indication information include, but are not limited to, at least one of followings.

The candidate terminal does not receive the first indication information sent by other terminals.

The candidate terminal receives the first indication information sent by other terminals.

The candidate terminal receives only first indication information sent by a target receiving terminal corresponding to the candidate terminal.

The candidate terminal does not receive the first indication information sent by the target receiving terminal corresponding to the candidate terminal.

It is to be understood that in the embodiment of the present disclosure, the states in which the multiple candidate terminals receive the first indication information may also be replaced by:
whether the multiple candidate terminals support receiving the resource conflict indication.

Optionally, the states in which the multiple candidate terminals receive the first indication information include, but are not limited to, at least one of followings.

The candidate terminal does not support receiving the first indication information sent by other terminals.

The candidate terminal supports receiving the first indication information sent by other terminals.

The candidate terminal only supports receiving the first indication information sent by the target receiving terminal corresponding to the candidate terminal.

The candidate terminal does not support receiving the first indication information sent by the target receiving terminal corresponding to the candidate terminal.

In some embodiments of the present disclosure, the method 100 further includes:
the first terminal determines, according to first information, the state in which each of the multiple candidate terminals receives the first indication information. The first information includes at least one of followings:
Sidelink Control Information (SCI), configuration information of a resource pool, or pre-configuration information (or predefined information).

In some embodiments, the configuration information of a resource pool may include at least one of followings:

whether the resource pool enables the terminal to send the resource conflict indication to the non-target sending terminal;
whether the resource pool enables the terminal to send the resource conflict indication to other terminals; or

whether the resource pool enables the terminal to send the resource conflict indication to the target sending terminal.

In some embodiments, the pre-configuration information may include at least one of followings:

whether the terminal is enabled to send the resource conflict indication to the non-target sending terminal;
whether the terminal is enabled to send the resource conflict indication to other terminals; or
whether the terminal is enabled to send the resource conflict indication to the target sending terminal.

In some embodiments, the first terminal may determine, the state in which the candidate terminal receives the resource conflict indication, according to a particular bit field in the SCI sent by the candidate terminal. Optionally, the SCI may include second-stage SCI.
Optionally, the candidate terminal may indicate the state in which the candidate terminal receives the resource conflict indication through an existing information field (e.g. a reserved field or reserved bit) or a newly added information field in the SCI. The specific carrying manner of the state is not limited in the present disclosure.
In some embodiments, the first terminal determines, through the SCI, different states in which the candidate terminal receives the resource conflict indication.
In a first example, different states in which the candidate terminal receives the resource conflict indication are indicated by 2 bits in the SCI.
Table 1 shows correspondences between values of the 2 bits and the different states in which the candidate terminal receives the resource conflict indication.

Table 1

| Value | Meaning |
|---|---|
| 00 | not receiving the resource conflict indication sent by other terminals |
| 01 | receiving only the resource conflict indication sent by the target receiving terminal |
| 10 | receiving the resource conflict indication sent by other terminals |
| 11 | reserved |

It is to be understood that the correspondences between the values of the bits and the meanings of the bits in Table 1 are only exemplary, and other correspondences between the values of the bits and the meanings of the bits may also be possible as long as it is ensured that each meaning corresponds to an unique value, which is not limited herein.
In a second example, different states in which the candidate terminal receives the resource conflict indication are indicated through 1 bit in SCI.
Table 2 shows correspondences between values of the 1 bit and the different states in which the candidate terminal receives the resource conflict indication.

Table 2

| Value | Meaning |
|---|---|
| 0 | not receiving the resource conflict indication sent by other terminals |
| 1 | receiving the resource conflict indication sent by other terminals |

It is to be understood that the correspondences between the values of the bit and the meanings of the bit in Table 2 are only exemplary, and other correspondences between the values of the bit and the meanings of the bit may also be possible as long as it is ensured that each meaning corresponds to an unique value, which is not limited herein.
In other embodiments, the first terminal determines different states in which the candidate terminal receives the resource conflict indication according to the configuration information of a resource pool and the SCI.
In a third example, a resource pool enables the terminal to send the resource conflict indication to the non-target sending terminal, and the candidate terminal may indicate the different states in which the candidate terminal receives the resource conflict indication through 2 bits in the SCI.
Table 3 shows correspondences between the values of the 2 bits and the different states in which the candidate terminal receives the resource conflict indication.

Table 3

| Value | Meaning |
|-------|---------|
| 00 | not receiving the resource conflict indication sent by other terminals |
| 01 | only receiving the resource conflict indication sent by the target receiving terminal |
| 10 | receiving the resource conflict indication sent by other terminals |
| 11 | reserved |

It is to be understood that the correspondences between the values of bits and the meanings of the bits in Table 3 are only exemplary, and other correspondences between the values of bits and the meanings of the bits may also be possible as long as it is ensured that each meaning corresponds to an unique value, which is not limited herein.

In a fourth example, the resource pool enables the terminal to send the resource conflict indication to the non-target sending terminal, and the candidate terminal may indicate the different states in which the candidate terminal receives the resource conflict indication through 1 bit in the SCI.

Table 4 shows correspondences between values of the 1 bit and the different states in which the candidate terminal receives the resource conflict indication.

Table 4

| Value | Meaning |
|-------|---------|
| 0 | not receiving the resource conflict indication sent by other terminals (including the target receiving terminal and the non-target receiving terminal) |
| 1 | receiving the resource conflict indication sent by other terminals (including the target receiving terminal and the non-target receiving terminal) |

It is to be understood that the correspondences between the values of the bit and the meanings of the bit in Table 4 are only exemplary, and other correspondences between the values of the bit and the meanings of the bit may also be possible as long as it is ensured that each meaning corresponds to an unique value, which is not limited herein.

In a fifth example, the resource pool does not enable the terminal to send the resource conflict indication to the non-target sending terminal, and the candidate terminal may indicate the different states in which the candidate terminal receives the resource conflict indication through 1 bit in SCI.

Table 5 shows correspondences between values of the 1 bit and the different states in which the candidate terminal receives the resource conflict indication.

Table 5

| Value | Meaning |
|-------|---------|
| 0 | not receiving the resource conflict indication sent by other terminals |
| 1 | only receiving the resource conflict indication sent by the target receiving terminal |

It is to be understood that the correspondences between the values of the bit and the meanings of the bit in Table 5 are only exemplary, and other correspondences between the values of the bit and the meanings of the bit may also be possible as long as it is ensured that each meaning corresponds to an unique value, which is not limited herein.

Table 6 shows further correspondences between the values of the 1 bit and the different states in which the candidate terminal receives the resource conflict indication.

Table 6

| Value | Meaning |
|-------|---------|
| 0 | not receiving the resource conflict indication sent by other terminals |
| 1 | receiving the resource conflict indication sent by another terminal (including only the target receiving terminal) |

It is to be understood that the correspondences between the values of the bit and the meanings of the bit in Table 6 are only exemplary, and other correspondences between the values of the bit and the meanings of the bit may also be possible as long as it is ensured that each meaning corresponds to an unique value, which is not limited herein.

In some embodiments, when the number of the sending terminals corresponding to the first terminal is one, i.e. only one terminal will send data to the first terminal. In this case, the first terminal determines said one sending terminal as the reference candidate terminal.

In some embodiments, if the resources reserved by the multiple sending terminals corresponding to the first terminal are overlapping, the first terminal may determine the reference candidate terminal among the multiple sending terminals. The multiple sending terminals all take the first terminal as the target receiving terminal, and the fact that the resources reserved by the multiple sending terminals are overlapping may mean that the resources reserved by the multiple sending terminals are at least partially the same. That is to say, there are multiple terminals that will send data to the first terminal, and the resources used for the multiple terminals to send the data are overlapping.

For example, as shown in FIG. 11, if the first terminal is the UE-A, the UE-B and the UE-C will send the data to the UE-A, and the UE-D and the UE-E will not send the data to the UE-A, then the UE-B and the UE-C are target sending terminals corresponding to the UE-A, and the UE-D and the UE-E are not the target sending terminals of the UE-A, i.e., the UE-D and the UE-E are the non-target sending terminals. The resource reserved by the UE-B overlaps with the resource reserved by the UE-C, so that the reference candidate terminal may be determined among the UE-B and the UE-C.

In some embodiments, the first terminal determines, according to second information, the reference candidate terminal among the multiple sending terminals. The second information includes at least one of followings:

states in which the multiple sending terminals receive the first indication information;
signal qualities of the multiple sending terminals; or
priorities of data to be sent by the multiple sending terminals.

It is to be understood that, the order of the following items according to which the first terminal determines the reference candidate terminal is not limited in the embodiment of the present disclosure: the states in which the multiple sending terminals receive the first indication information, the signal qualities of the multiple sending terminals, and the priorities of the data to be sent by the multiple sending terminals.

For example, the first terminal may perform selection firstly according to the priorities of the data to be sent, or may perform selection firstly according to the states in which the first indication information is received, or may perform selection firstly according to the signal qualities; or, if one sending terminal can be selected according to one piece of the above three pieces of information, a further selection may not be performed in combination with other information. The usage rule for determining the reference candidate terminal according to the above information is not limited in the present disclosure.

In some embodiments, the reference candidate terminal satisfies at least one of following conditions.

The reference candidate terminal has data to be sent with the highest priority among the multiple sending terminals.

The reference candidate terminal does not receive the first indication information sent by the non-target receiving terminal or other terminals.

The reference candidate terminal has a highest signal quality among the multiple sending terminals.

As an example, the first terminal may determine the reference candidate terminal according to a first criterion as follows.

A sending terminal having the data to be sent with the highest priority among the multiple sending terminals is determined as the reference candidate terminal.

If the multiple sending terminals have data to be sent with the same priority, the reference candidate terminal may be further determined in combination with the states in which the sending terminals receive the resource conflict indication. For example, a sending terminal that does not receive the resource conflict indication is determined as the reference candidate terminal.

Optionally, if there are multiple sending terminals satisfying the above two conditions, the reference candidate terminal may be further determined in combination with the signal qualities of the sending terminals. For example, the sending terminal having the optimal signal quality may be determined as the reference candidate terminal.

As an example, the first terminal may determine the reference candidate terminal according to a second criterion as follows.

A sending terminal having the data to be sent with the highest priority among the multiple sending terminals is determined as the reference candidate terminal.

If the multiple sending terminals have data to be sent with the same priority, the reference candidate terminal may be further determined in combination with the signal qualities of the sending terminals. For example, a sending terminal having the optimal signal quality may be determined as the reference candidate terminal.

As an example, the first terminal may determine the reference candidate terminal according to a third criterion as follows.

A sending terminal that does not receive the resource conflict indication is determined as the reference candidate terminal.

If multiple sending terminals do not receive the resource conflict indication, the reference candidate terminal is further determined in combination with the priorities of data to be sent by the multiple sending terminals. For example, the sending terminal having the data to be sent with the highest priority among the multiple sending terminals is determined as the reference candidate terminal.

Optionally, if there are multiple sending terminals satisfying the above two conditions, the reference candidate terminal may be further determined in combination with the signal qualities of the sending terminals. For example, the sending terminal having the optimal signal quality may be determined as the reference candidate terminal.

In some embodiments of the present disclosure, the target information includes first target information, and operation S110 includes:

the target receiving terminal for the first indication information is determined, according to the first target information, among the reference candidate terminal and the first candidate terminal group, where the first target information includes at least one of followings:

a state in which the reference candidate terminal receives the first indication information;
a state in which a candidate terminal in the first candidate terminal group receives the first indication information;
a signal quality of the candidate terminal in the first candidate terminal group;
a priority of data to be sent by the reference candidate terminal; or
a priority of data to be sent by the candidate terminal in the first candidate terminal group.

For example, if the priority of the data to be sent by the candidate terminal in the first candidate terminal group is higher than the priority of the data to be sent by the reference candidate terminal, the reference candidate terminal may be determined as the target receiving terminal for the resource conflict indication, which is beneficial to ensure the transmission of the data with the high priority.

For another example, if the signal quality of the data to be sent by the candidate terminal in the first candidate terminal group is lower than a certain threshold, or the signal quality of the data to be sent by the candidate terminal in the first candidate terminal group is lower than the signal quality of the reference candidate terminal, that is to say, the signal interference brought by the reference candidate terminal is higher than the signal interference brought by the candidate terminal in the first candidate terminal group, then the reference candidate terminal may be determined as the target receiving terminal for the resource conflict indication, which is beneficial to avoid the problem of the hidden node in the sidelink transmission.

For yet another example, if the reference candidate terminal receives the resource conflict indication, and the candidate terminal in the first candidate terminal group does not receive the resource conflict indication, then the reference candidate terminal is determined as the target receiving terminal for the resource conflict indication, which is beneficial to ensure that the terminal receiving the resource conflict indication performs the resource reselection, thereby reducing the probability of the resource conflict and improving the system performance.

Hereinafter, a manner for determining the target receiving terminal for the resource conflict indication will be described in connection with specific embodiments.

The first embodiment

In some embodiments, if the reference candidate terminal does not receive the first indication information sent by the target receiving terminal, and at least one candidate terminal in the first candidate terminal group receives the first indication information sent by other terminals, the target receiving terminal for the first indication information is determined among the at least one candidate terminal.

In other words, the reference candidate terminal does not support receiving the resource conflict indication sent by the first terminal, and at least one candidate terminal in the first candidate terminal group supports receiving the resource conflict indication. In this case, the target receiving terminal for the resource conflict indication may be determined among the at least one candidate terminal, so that the candidate terminal that supports receiving the resource conflict indication may perform the resource reselection, which is beneficial to reduce the probability of the resource conflict, improving the system performance and avoiding the problem of the hidden node in the sidelink transmission.

In some embodiments, the first terminal may determine the target receiving terminal for the first indication information according to at least one of: a signal quality of the at least one candidate terminal, a priority of the data to be sent by the at least one candidate terminal, and a priority of the data to be sent by the reference candidate terminal.

For example, among the at least one candidate terminal, a candidate terminal with the poorest signal quality or with a signal quality lower than a certain threshold is determined as the target receiving terminal for the resource conflict indication.

For another example, among the at least one candidate terminal, a candidate terminal having the data to be sent with the lowest priority is determined as the target receiving terminal for the resource conflict indication, or a candidate terminal having the data to be sent with a priority lower than a certain priority threshold is determined as the target receiving terminal for the resource conflict indication.

For yet another example, among the at least one candidate terminal, a candidate terminal having data to be sent with a priority lower than the priority of data to be sent by the reference candidate terminal is determined as the target receiving terminal for the resource conflict indication.

In some embodiments, the operation that the target receiving terminal for the first indication information is determined among the at least one candidate terminal includes:

a candidate terminal satisfying a first condition is determined among the at least one candidate terminal as the target receiving terminal for the first indication information, where the first condition includes at least one of following conditions.

A signal quality of the candidate terminal measured by the first terminal is not less than a first threshold.

If resource pre-emption is activated for a resource pool, a priority of data to be sent by the reference candidate terminal is higher than a priority of data to be sent by the candidate terminal.

If the resource pre-emption is not activated for the resource pool, the priority of the data to be sent by the reference candidate terminal is higher than the priority of the data to be sent by the candidate terminal, and the priority of the data to be sent by the reference candidate terminal is higher than a first priority threshold.

The candidate terminal receives the first indication information sent by the non-target receiving terminal or other terminals.

The condition that the signal quality of the candidate terminal measured by the first terminal is not less than the first threshold may be considered that the interference brought by the data transmission of the candidate terminal is larger. The target receiving terminal for the resource conflict indication is determined among this type of candidate terminals, which is beneficial to avoid the problem of the hidden node in the sidelink transmission.

The fact that priority of the data to be sent by the reference candidate terminal is higher than the priority of the data to be sent by the candidate terminal and/or the priority of the data to be sent by the reference candidate terminal is higher than the first priority threshold indicates that the priority of the data to be sent by the this type of candidate terminals is lower, or the priority of the data to be sent by the reference candidate terminal is higher. The target receiving terminal for the resource conflict indication is determined among this type of the candidate terminals, which is beneficial to ensure that the data to be sent with high priority is transmitted preferentially by using the conflicting resources.

**In** some embodiments, the first threshold is pre-configured (or predefined), or is configured by a network device. For example, the network device configures the first threshold through Radio Resource Control (RRC) signaling.

In some embodiments, the first priority threshold is pre-configured (or predefined), or is configured by the network device. For example, the network device configures the first priority threshold by the RRC signaling.

Furthermore, in some embodiments, the method 100 further includes:

if multiple candidate terminals satisfy the first condition, and the first terminal is unable to send, in one slot, the first indication information to all candidate terminals satisfying the first condition, the first terminal determines the target receiving terminal for the first indication information according to signal qualities and/or the priorities of the data to be sent by the plurality candidate terminals satisfying the first condition.

For example, the first terminal determines, among the multiple candidate terminals satisfying the first condition, N candidate terminals with optimal signal qualities as the target receiving terminals for the first indication information, where N is a maximum number of pieces of the first indication information that the first terminal is able to send in a slot where the first indication information is sent.

For another example, the first terminal determines, among the multiple candidate terminals satisfying the first condition, N candidate terminals with the highest priorities as target receiving terminals for the first indication information, where N is a maximum number of pieces of the first indication information that the first terminal is able to send in a slot where the first indication information is sent.

For yet another example, the first terminal determines, among the multiple candidate terminals satisfying the first condition, the candidate terminal with the highest priority as the target receiving terminal for the first indication information, where N is a maximum number of pieces of the first indication information that the first terminal is able to send in a slot where the first indication information is sent.

The second embodiment

In some embodiments, if the reference candidate terminal receives the first indication information sent by the target receiving terminal (or if the reference candidate terminal supports receiving the resource conflict indication sent by the first terminal) and at least one candidate terminal in the first candidate terminal group satisfies a second condition, the reference candidate terminal is determined as the target receiving terminal for the first indication information.

Optionally, the candidate terminal satisfying the second condition may be considered as a type of terminals having a larger signal interference, or a type of terminals having data to be sent with a higher priority, or a type of terminals having data to be sent with a priority higher than the priority of data to be sent by the reference candidate terminal.

Optionally, in the second embodiment, the priority of data to be sent by the reference candidate terminal is lower.

In some embodiments, the second condition includes, but is not limited to, at least one of the followings.

A signal quality of the candidate terminal measured by the first terminal is not less than a second threshold.

The candidate terminal does not receive the first indication information sent by the non-target receiving terminal or other terminals.

If resource pre-emption is activated for a resource pool, a priority of data to be sent by the reference candidate terminal is lower than a priority of data to be sent by the candidate terminal.

If the resource pre-emption is not activated for the resource pool, the priority of the data to be sent by the reference candidate terminal is lower than the priority of the data to be sent by the candidate terminal, or the priority of the data to be sent by the reference candidate terminal is lower than a second priority threshold.

As a specific example, the second condition may include the following conditions.

The signal quality of the candidate terminal measured by the first terminal is not less than the second threshold.

The candidate terminal does not receive the first indication information sent by the non-target receiving terminal or other terminals.

As another specific example, the second condition may include the following conditions.

The signal quality of the candidate terminal measured by the first terminal is not less than a second threshold.

If resource pre-emption is activated for the resource pool, a priority of data to be sent by the reference candidate terminal is lower than a priority of data to be sent by the candidate terminal.

If the resource pre-emption is not activated for the resource pool, the priority of the data to be sent by the reference candidate terminal is lower than the priority of the data to be sent by the candidate terminal, or the priority of the data to be sent by the reference candidate terminal is lower than a second priority threshold.

In some embodiments, the second threshold is pre-configured (or predefined), or is configured by the network device. For example, the network device configures the second threshold through the RRC signaling.

In some embodiments, the second priority threshold is pre-configured (or predefined), or is configured by the network device. For example, the network device configures the second priority threshold through the RRC signaling.

The third embodiment

In some embodiments, if the reference candidate terminal receives the first indication information sent by the target receiving terminal, and at least one candidate terminal in the first candidate terminal group satisfies a third condition and at least one candidate in the first candidate terminal group terminal satisfies a fourth condition, the candidate terminal satisfying the fourth condition is determined as the target receiving terminal for the first indication information.

In the third embodiment, the candidate terminal satisfying the third condition can be considered as a type of terminals with lower signal interference.

In the third embodiment, the candidate terminal satisfying the fourth condition can be considered as a type of terminals with larger signal interference, or a type of terminals that do not support receiving the resource conflict indication, or a type of terminals having data to be sent with lower priority. For example, the priority of the data to be sent by the candidate terminal satisfying the fourth condition is lower than the priority of the data to be sent by the reference candidate terminal.

In this case, the target receiving terminal for the resource conflict indication is determined among the candidate terminals satisfying the fourth condition, so that this type of terminals may perform the resource reselection according to the resource conflict indication, which is beneficial to avoid the problem of the hidden node in the sidelink transmission or to ensure the reliable transmission of the data with the high priority.

In some embodiments, the third condition includes, but is not limited to, the following.

The signal quality of the candidate terminal measured by the first terminal is not greater than a third threshold.

In some embodiments, the fourth condition includes, but is not limited to, at least one of the followings.

A signal quality of the candidate terminal measured by the first terminal is not less than a fourth threshold.

The candidate terminal receives the first indication information sent by the non-target receiving terminal or other terminals.

If resource pre-emption is activated for a resource pool, a priority of data to be sent by the reference candidate terminal is higher than a priority of data to be sent by the candidate terminal.

If the resource pre-emption is not activated for the resource pool, the priority of the data to be sent by the reference candidate terminal is higher than the priority of the data to be sent by the candidate terminal, or the priority of the data to be sent by the reference candidate terminal is higher than a third priority threshold.

As an example, the fourth condition includes the following conditions.

The signal quality of the candidate terminal measured by the first terminal is not less than a fourth threshold.

If resource pre-emption is activated for a resource pool, a priority of data to be sent by the reference candidate terminal is higher than a priority of data to be sent by the candidate terminal.

If the resource pre-emption is not activated for the resource pool, the priority of the data to be sent by the reference candidate terminal is higher than the priority of the data to be sent by the candidate terminal, or the priority of the data to be sent by the reference candidate terminal is higher than a third priority threshold.

As another example, the fourth condition includes following conditions.

The signal quality of the candidate terminal measured by the first terminal is not less than a fourth threshold.

The candidate terminal receives the first indication information sent by the non-target receiving terminal or other terminals.

In some embodiments, the third threshold is pre-configured (or predefined), or is configured by the network device. For example, the network device configures the third threshold through the RRC signaling.

In some embodiments, the fourth threshold is pre-configured (or predefined), or is configured by the network device. For example, the network device configures the fourth threshold through the RRC signaling.

In some embodiments, the third priority threshold is pre-configured (or predefined), or is configured by the network device. For example, the network device configures the third priority threshold through the RRC signaling.

Furthermore, in some embodiments, the method 100 further includes:

If multiple candidate terminals satisfy the fourth condition, and the first terminal is unable to send, in one slot, the first indication information to all candidate terminals satisfying the fourth condition, the first terminal determines the target receiving terminal for the first indication information according to signal qualities and/or the priorities of the data to be sent by the multiple candidate terminals satisfying the fourth condition.

For example, the first terminal determines, among the multiple candidate terminals satisfying the fourth condition, N candidate terminals with optimal signal qualities as the target receiving terminals for the first indication information, where N is a maximum number of pieces of the first indication information that the first terminal is able to send in a slot where the first indication information is sent.

For another example, the first terminal determines, among the multiple candidate terminals satisfying the fourth condition, N candidate terminals with the highest priorities as target receiving terminals for the first indication information, where N is a maximum number of pieces of the first indication information that the first terminal is able to send in a slot where the first indication information is sent.

For yet another example, the first terminal determines, among the multiple candidate terminals satisfying the fourth condition, the candidate terminal with the highest priority as the target receiving terminal for the first indication information, where N is a maximum number of pieces of the first indication information that the first terminal is able to send in a slot where the first indication information is sent.

In summary, in a case where the resources reserved by multiple candidate terminals are in conflict, the first terminal may determine the target receiving terminal for the resource conflict indication according to the information such as the signal qualities of the multiple candidate terminals, the priority of the data to be sent by the multiple candidate terminals, the states in which the multiple candidate terminals receive the resource conflict indication, and further send the resource conflict indication to the target receiving terminal, which is beneficial to reduce the probability of the resource conflict and improve the system performance. Moreover, the target receiving terminal for the resource conflict indication is determined according to signal qualities of the candidate terminals, which is beneficial to alleviate the hidden node problem. The target receiving terminal for the resource conflict indication is determined according to the priorities of data to be sent by the candidate terminals, which is beneficial to ensure the reliable transmission of the data to be sent with high priority.

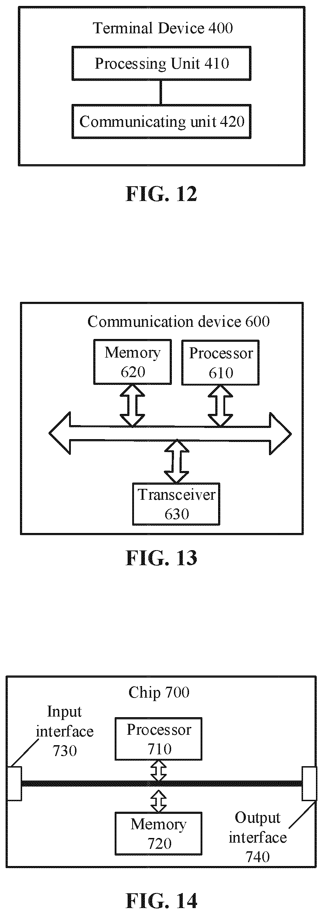

FIG. 12 shows a schematic block diagram of a terminal device 400 according to an embodiment of the present disclosure. As shown in FIG. 12, the terminal device 400 includes a processing unit 410.

The processing unit 410 is configured to determine, according to target information, a target receiving terminal for first indication information among multiple candidate terminals, where the first indication information is used for indicating occurrence of a resource conflict.

The multiple candidate terminals include a reference candidate terminal and a first candidate terminal group, a resource reserved by the reference candidate terminal is a target receiving resource of the terminal device, the first candidate terminal group includes at least one candidate terminal, and a resource reserved by a candidate terminal in the first candidate terminal group overlaps with the resource reserved by the reference candidate terminal.

The target information includes at least one of followings.

The number of candidate terminals of a first type in the first candidate terminal group, where the candidate terminals of the first type take the terminal device as a target receiving terminal.

States in which the multiple candidate terminals receive the first indication information.

Signal qualities of the multiple candidate terminals.

Priorities of data to be sent by the multiple candidate terminals.

In some embodiments of the present disclosure, the states in which the multiple candidate terminals receive the first indication information include at least one of followings.

The candidate terminal does not receive the first indication information sent by other terminals.

The candidate terminal receives the first indication information sent by other terminals.

The candidate terminal receives only first indication information sent by a target receiving terminal corresponding to the candidate terminal.

The candidate terminal does not receive the first indication information sent by the target receiving terminal corresponding to the candidate terminal.

In some embodiments of the present disclosure, the processing unit 410 is further configured to:

determine, according to first information, the state in which each of the multiple candidate terminals receives the first indication information, where the first information includes at least one of followings.

SCI, configuration information of a resource pool, or pre-configuration information.

In some embodiments of the present disclosure, the target information includes first target information, and the processing unit 410 is specifically configured to:

determine, according to the first target information, the target receiving terminal for the first indication information among the reference candidate terminal and the first candidate terminal group, where the first target information includes at least one of followings.

A state in which the reference candidate terminal receives the first indication information.

A state in which a candidate terminal in the first candidate terminal group receives the first indication information.

A Signal quality of a candidate terminal in the first candidate terminal group.

A priority of data to be sent by the reference candidate terminal.

A priority of data to be sent by the candidate terminal in the first candidate terminal group.

In some embodiments of the present disclosure, the processing unit 410 is further configured to:

if the reference candidate terminal does not receive the first indication information sent by the target receiving terminal, and at least one candidate terminal in the first candidate terminal group receives the first indication information sent by other terminals, determine, among the at least one candidate terminal, the target receiving terminal for the first indication information.

In some embodiments of the present disclosure, the processing unit 410 is further configured to:

determine, among the at least one candidate terminal, a candidate terminal satisfying a first condition as the target receiving terminal for the first indication information, where the first condition includes at least one of following conditions.

A signal quality of the candidate terminal measured by the terminal device is not less than a first threshold.

If resource pre-emption is activated for a resource pool, a priority of data to be sent by the reference candidate terminal is higher than a priority of data to be sent by the candidate terminal.

If the resource pre-emption is not activated for the resource pool, the priority of the data to be sent by the reference candidate terminal is higher than the priority of the data to be sent by the candidate terminal, and the priority of the data to be sent by the reference candidate terminal is higher than a first priority threshold

The candidate terminal receives the first indication information sent by the non-target receiving terminal or other terminals.

In some embodiments of the present disclosure, the processing unit 410 is further configured to:

if multiple candidate terminals satisfy the first condition, and the terminal device is unable to send, in one slot, the first indication information to all candidate terminals satisfying the first condition, determine the target receiving terminal for the first indication information according to signal qualities of the plurality candidate terminals satisfying the first condition.

In some embodiments of the present disclosure, the processing unit 410 is further configured to:

determine, among the multiple candidate terminals satisfying the first condition, N candidate terminals with optimal signal qualities as the target receiving terminals for the first indication information, where N is a maximum number of pieces of the first indication information that the terminal device is able to send in a slot where the first indication information is sent.

In some embodiments of the present disclosure, the first threshold is pre-configured, or configured by a network device.

In some embodiments of the present disclosure, the first priority threshold is pre-configured, or configured by a network device.

In some embodiments of the present disclosure, the processing unit 410 is further configured to:

if the reference candidate terminal receives the first indication information sent by the target receiving terminal and at least one candidate terminal in the first candidate terminal group satisfies a second condition, determine the reference candidate terminal as the target receiving terminal for the first indication information.

The second condition includes at least one of the following.

A signal quality of the candidate terminal measured by the terminal device is not less than a second threshold.

The candidate terminal does not receive the first indication information sent by a non-target receiving terminal or other terminals.

If resource pre-emption is activated for a resource pool, a priority of data to be sent by the reference candidate terminal is lower than a priority of data to be sent by the candidate terminal.

If the resource pre-emption is not activated for the resource pool, the priority of the data to be sent by the reference candidate terminal is lower than the priority of the data to be sent by the candidate terminal, or the priority of the data to be sent by the reference candidate terminal is lower than a second priority threshold.

In some embodiments of the present disclosure, t the second threshold is pre-configured, or configured by a network device.

In some embodiments of the present disclosure, the second priority threshold is pre-configured, or configured by a network device.

In some embodiments of the present disclosure, the processing unit 410 is further configured to: if the reference candidate terminal receives the first indication information sent by the target receiving terminal, and at least one candidate terminal in the first candidate terminal group satisfies a third condition and at least one candidate in the first candidate terminal group terminal satisfies a fourth condition, determine the candidate terminal satisfying the fourth condition as the target receiving terminal for the first indication information.

The third condition includes: a signal quality of the candidate terminal measured by the terminal device is not greater than a third threshold.

The fourth condition includes at least one of the following.

A signal quality of the candidate terminal measured by the terminal device is not less than a fourth threshold.

The candidate terminal receives the first indication information sent by a non-target receiving terminal or other terminals.

If resource pre-emption is activated for a resource pool, a priority of data to be sent by the reference candidate terminal is higher than a priority of data to be sent by the candidate terminal.

If the resource pre-emption is not activated for the resource pool, the priority of the data to be sent by the reference candidate terminal is higher than the priority of the data to be sent by the candidate terminal, or the priority of the data to be sent by the reference candidate terminal is higher than a third priority threshold.

In some embodiments of the present disclosure, the third threshold is pre-configured, or configured by a network device.

In some embodiments of the present disclosure, the fourth threshold is pre-configured, or configured by a network device.

In some embodiments of the present disclosure, the third priority threshold is pre-configured, or configured by a network device.

In some embodiments of the present disclosure, the processing unit 410 is further configured to: if multiple candidate terminals satisfy the fourth condition, and the terminal device is unable to send, in one slot, the first indication information to all candidate terminals satisfying the fourth condition, determine the target receiving terminal for the first indication information according to signal qualities of the plurality candidate terminals satisfying the fourth condition.

In some embodiments of the present disclosure, the processing unit 410 is further configured to: determine, among the multiple candidate terminals satisfying the fourth condition, N candidate terminals with optimal signal qualities as the target receiving terminals for the first indication information, where N is a maximum number of pieces of the first indication information that the terminal device is able to send in a slot where the first indication information is sent.

In some embodiments of the present disclosure, the processing unit 410 is further configured to: determine, according to second information, the reference candidate terminal among multiple sending terminals, where each of the multiple sending terminals takes the terminal device as the target receiving terminal, and resources reserved by the multiple sending terminals are overlapping, where the second information includes at least one of following.

States in which the multiple sending terminals receive the first indication information

Signal qualities of the multiple sending terminals.

Priorities of data to be sent by the multiple sending terminals.

In some embodiments of the present disclosure, the reference candidate terminal satisfies at least one of the following conditions.

The reference candidate terminal has data to be sent with a highest priority among the multiple sending terminals.

The reference candidate terminal does not receive first indication information sent by a non-target receiving terminal or other terminals.

The reference candidate terminal has a highest signal quality among the multiple sending terminals.

In some embodiments of the present disclosure, the first candidate terminal group includes: at least one candidate terminal of the first type and/or at least one candidate terminal of a second type, where the candidate terminal of the second type does not take the terminal device as the target receiving terminal.

In some embodiments of the present disclosure, the terminal device 400 further includes a communicating unit 420.

The communicating unit 420 is configured to send the first indication information to the target receiving terminal for the first indication information.

Optionally, in some embodiments, the communicating module may be a communication interface or a transceiver or an input-output interface of a communication chip or a system-on-chip. The determining module may be one or more processors.

It is to be understood that the terminal device 400 in the embodiment of the present disclosure may correspond to the terminal device in the method embodiments in the present disclosure, and that each of above operations and other operations and/or functions of the various units in the terminal device 400 is used for implementing the respective flow implemented by the terminal device in the method 100 shown in FIG. 10.

FIG. 13 is a schematic structural diagram of a communication device 600 according to an embodiment of the present disclosure. The communication device 600 shown in FIG. 13 includes a processor 610 that may invoke and run a computer program from a memory to implement the method in the embodiment of the present disclosure.

Optionally, as shown in FIG. 13, the communication device 600 may also include a memory 620. The processor 610 may invoke and run a computer program from the memory 620 to implement the method in the embodiment of the present disclosure.

The memory 620 may be a separate device independent of or the memory 620 may be integrated into the processor 610.

Optionally, as shown in FIG. 13, the communication device 600 may also include a transceiver 630. The processor 610 may control the transceiver 630 to communicate with other devices, in particular, to send information or data to other devices, or receive information or data sent by other devices.

The transceiver 630 may include a transmitter and a receiver. The transceiver 630 may further include an antenna(s), the number of which may be one or more.

Optionally, the communication device 600 may be specifically a network device in the embodiments of the present disclosure, and the communication device 600 may implement the corresponding process implemented by the network device in each method of the embodiments of the present disclosure, which will not be repeated herein for the sake of brevity.

Optionally, the communication device 600 may be a first terminal device according to the embodiments of the present disclosure, and the communication device 600 may implement the corresponding flow implemented by the first terminal device in each method of the embodiments of the present disclosure, which will not be repeated herein for the sake of brevity.

FIG. 14 is a schematic structural diagram of a chip according to an embodiment of the present disclosure. The chip 700 shown in FIG. 14 includes a processor 710 that may invoke and run a computer program from a memory to implement the method in the embodiment of the present disclosure.

Optionally, as shown in FIG. 14, the chip 700 may also include a memory 720. The processor 710 may invoke and run a computer program from the memory 720 to implement the method in the embodiment of the present disclosure.

The memory 720 may be a separate device independent of the processor 710 or the memory 720 may be integrated in the processor 710.

Optionally, the chip 700 may also include an input interface 730. The processor 710 may control the input interface 730 to communicate with other devices or chips, and in particular may obtain information or data sent by other devices or chips.

Optionally, the chip 700 may also include an output interface 740. The processor 710 may control the output interface 740 to communicate with other devices or chips, and in particular may output information or data to other devices or chips.

Optionally, the chip may be applied to the network device in the embodiments of the present disclosure, and the chip may implement the corresponding process implemented by the network device in each method of the embodiments of the disclosure, which is not repeated herein for the sake of brevity.

Optionally, the chip may be applied to the first terminal in the embodiments of the present disclosure, and the chip may implement the corresponding flow implemented by the first terminal in each method of the embodiment of the disclosure. For the sake of simplicity, which will not be repeated herein for the sake of brevity.

It is to be understood that chips mentioned in the embodiments of the present disclosure may also be referred to as system level chips, system chips, chip systems or on-chip system chips, etc.

It is to be understood that the processor of the embodiments of the disclosure may be an integrated circuit chip with signal processing capacity. In an implementation process, various steps of the above method embodiments may be completed by an integrated logic circuit of hardware in the processor or an instruction in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the disclosure may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

The embodiments of the disclosure further provide a computer-readable storage medium, which is configured to store a computer program.

Optionally, the computer-readable storage medium may be applied to a network device in the embodiments of the disclosure. The computer program enables a computer to execute corresponding flows implemented by the network device in each method of the embodiments of the disclosure, which will not be elaborated here for simplicity.

Optionally, the computer-readable storage medium may be applied to the first terminal in the embodiments of the disclosure. The computer program enables a computer to execute corresponding flows implemented by the first terminal in each method of the embodiments of the disclosure, which will not be elaborated here for simplicity.

The embodiments of the disclosure further provide a computer program product, which includes a computer program instruction.

Optionally, the computer program product may be applied to a network device in the embodiments of the disclosure. The computer program instruction enables a computer to execute corresponding flows implemented by the network device in each method of the embodiments of the disclosure, which will not be elaborated here for simplicity.

Optionally, the computer program product may be applied to a mobile terminal/a terminal device in the embodiments of the disclosure. The computer program instruction enables a computer to execute corresponding flows implemented by the mobile terminal/the terminal device in each method of the embodiments of the disclosure, which will not be elaborated herein for simplicity.

The embodiments of the disclosure further provide a computer program.

Optionally, the computer program may be applied to a network device in the embodiments of the disclosure. The computer program runs in a computer to enable the computer to execute corresponding flows implemented by the network device in each method of the embodiments of the disclosure, which will not be elaborated here for simplicity.

Optionally, the computer program may be applied to the first terminal in the embodiments of the disclosure. When running on a computer, the computer program enables a computer to execute corresponding flows implemented by the first terminal in each method of the embodiments of the disclosure, which will not be elaborated here for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may realize the described functions for each particular disclosure by different methods, but it is not be considered that the implementation is beyond the scope of the disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the disclosure, it is to be understood that the disclosed system, apparatus, and method may be implemented in other modes. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, functional units in various embodiments of the disclosure may be integrated into one processing unit, or each of the units may be physically separated, or two or more units may be integrated into one unit.

When the functions are realized in a form of a software functional unit and sold or used as an independent product, they may be stored in a computer-readable storage medium. Based on this understanding, the technical solutions of the embodiments of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the method described in the embodiments of the disclosure. The foregoing storage medium includes a USB flash disk, a mobile hard disk drive, an ROM, an RAM, and various media that can store program codes, such as a magnetic disk or an optical disk.

The above descriptions are merely specific implementations of the disclosure, but are not intended to limit the scope of protection of the disclosure. Therefore, the scope of protection of the disclosure is defined by the scope of protection of the claims.

**Claims**

1. A wireless communication method, comprising:

   determining (S110), by a first terminal according to target information, a target receiving terminal for first indication information among a plurality of candidate terminals, wherein the first indication information indicates occurrence of a resource conflict between resources reserved by the plurality of candidate terminals; and
   sending, by the first terminal, the first indication information to the target receiving terminal,
   **characterized in that**, the target information comprises:

   states indicating, for each candidate terminal of the plurality of candidate terminals, whether the candidate terminal supports or does not support receiving the first indication information sent by other terminals,
   wherein the plurality of candidate terminals comprises a reference candidate terminal and at least one candidate terminal of a first type or at least one candidate terminal of a second type, a reserved resource reserved by the reference candidate terminal is a target receiving resource of the first terminal, and the reserved resource is for the first terminal to receive sidelink data sent by the reference candidate terminal on the reserved resource; the at least one candidate terminal of the first type is a target sending terminal corresponding to the first terminal, the at least one candidate terminal of the second type is not the target sending terminal corresponding to the first terminal, and a resource reserved by the at least one candidate terminal of the first type or the at least one candidate terminal of the second type overlaps with the reserved resource,
   wherein the target information comprises first target information, and determining, by the first terminal according to the target information, the target receiving terminal for the first indication information among the plurality of candidate terminals comprises:
   determining, according to the first target information, the target receiving terminal for the first indication information among the reference candidate terminal and the at least one candidate terminal of the first type or the at least one candidate terminal of the second type, wherein the first target information comprises at least one of:

   a state indicating whether the reference candidate terminal supports or does not support receiving the first indication information, or
   a state indicating whether the at least one candidate terminal of the first type or the at least one candidate terminal of the second type supports or does not support receiving the first indication information.

2. The method of claim 1, further comprising:

determining, by the first terminal according to first information, said states, wherein the first information comprises at least one of:
Sidelink Control Information, SCI, configuration information of a resource pool, or pre-configuration information.

3. The method of claim 2, wherein whether the candidate terminal supports or does not support receiving the first indication information sent by other terminals is indicated by the candidate terminal through a reserved bit in the SCI.

4. The method of claim 1, wherein determining, according to the first target information, the target receiving terminal for the first indication information comprises:
if the reference candidate terminal does not support receiving the first indication information sent by the target receiving terminal, and the at least one candidate terminal of the first type or the at least one candidate terminal of the second type supports receiving the first indication information sent by other terminals, determining, among the at least one candidate terminal of the first type or the at least one candidate terminal of the second type, the target receiving terminal for the first indication information.

5. A terminal device (400), comprising:

a processing unit (410), configured to determine, according to target information, a target receiving terminal for first indication information among a plurality of candidate terminals, wherein the first indication information indicates occurrence of a resource conflict between resources reserved by the plurality of candidate terminals; and
a communicating unit (420), configured to send the first indication information to the target receiving terminal, **characterized in that**, the target information comprises:

states indicating, for each candidate terminal of the plurality of candidate terminals, whether the candidate terminal supports or does not support receiving the first indication information sent by other terminals, wherein the plurality of candidate terminals comprises a reference candidate terminal and at least one candidate terminal of a first type or at least one candidate terminal of a second type, a reserved resource reserved by the reference candidate terminal is a target receiving resource of the terminal device, and the reserved resource is for the terminal device to receive sidelink data sent by the reference candidate terminal on the reserved resource; the at least one candidate terminal of the first type is a target sending terminal corresponding to the terminal device, the at least one candidate terminal of the second type is not the target sending terminal corresponding to the terminal device, and a resource reserved by the at least one candidate terminal of the first type or the at least one candidate terminal of the second type overlaps with the reserved resource,
wherein the target information comprises first target information, and the processing unit (410) is specifically configured to:
determine, according to the first target information, the target receiving terminal for the first indication information among the reference candidate terminal and the at least one candidate terminal of the first type or the at least one candidate terminal of the second type, wherein the first target information comprises at least one of:

a state indicating whether the reference candidate terminal supports or does not support receiving the first indication information, or
a state indicating whether the at least one candidate terminal of the first type or the at least one candidate terminal of the second type supports or does not support receiving the first indication information.

6. The terminal device (400) of claim 5, wherein the processing unit (410) is further configured to:
determine, according to first information, said states, wherein the first information comprises at least one of:
Sidelink Control Information, SCI, configuration information of a resource pool, or pre-configuration information.

7. The terminal device (400) of claim 6, wherein whether the candidate terminal supports or does not support receiving the first indication information sent by other terminals is indicated by the candidate terminal through a reserved bit in the SCI.

8. The terminal device (400) of claim 5, wherein the processing unit (410) is further configured to:
if the reference candidate terminal does not support receiving the first indication information sent by the target receiving terminal, and the at least one candidate terminal of the first type or the at least one candidate terminal of the second type supports receiving the first indication information sent by other terminals, determine, among the at least one candidate terminal of the first type or the at least one candidate terminal of the second type, the target receiving terminal for the first indication information.

9. A computer-readable storage medium having stored therein a computer program that, when executed by a wireless terminal, causes the wireless terminal to perform the method of any one of claims 1 to 4.

**Patentansprüche**

1. Drahtloskommunikationsverfahren, umfassend:

Bestimmen (S110) durch ein erstes Endgerät anhand von Zielinformationen eines Zielempfangsendgeräts für erste Angabeinformationen aus einer Vielzahl von Kandidatenendgeräten, wobei die ersten Angabeinformationen Auftreten eines Ressourcenkonflikts zwischen Ressourcen, die von der Vielzahl von Kandidatenendgeräten reserviert werden, angeben; und
Senden durch das erste Endgerät der ersten Angabeinformationen an das Zielempfangsendgerät,
**dadurch gekennzeichnet, dass** die Zielinformationen umfassen:

Zustände, die für jedes Kandidatenendgerät der Vielzahl von Kandidatenendgeräten angeben, ob das Kandidatenendgerät Empfangen der von anderen Endgeräten gesendeten ersten Angabeinformationen unterstützt oder nicht unterstützt,
wobei die Vielzahl von Kandidatenendgeräten ein Referenzkandidatenendgerät und mindestens ein Kandidatenendgerät eines ersten Typs oder mindestens ein Kandidatenendgerät eines zweiten Typs umfasst, eine vom Referenzkandidatenendgerät reservierte Ressource eine Zielempfangsressource des ersten Endgeräts ist und die reservierte Ressource dazu dient, dass das erste Endgerät Sidelink-Daten empfängt, die vom Referenzkandidatenendgerät über die reservierte Ressource gesendet werden; das mindestens eine Kandidatenendgerät des ersten Typs ein dem ersten Endgerät entsprechendes Zielsendeendgerät ist, das mindestens eine Kandidatenendgerät des zweiten Typs nicht das dem ersten Endgerät entsprechende Zielsendeendgerät ist und eine vom mindestens einen Kandidatenendgerät des ersten Typs oder dem mindestens einen Kandidatenendgerät des zweiten Typs reservierte Ressource sich mit der reservierten Ressource überschneidet,
wobei die Zielinformationen erste Zielinformationen umfassen und Bestimmen durch das erste Endgerät gemäß den Zielinformationen des Zielempfangsendgeräts für die ersten Angabeinformationen aus der Vielzahl von Kandidatenendgeräten umfasst:

Bestimmen gemäß den ersten Zielinformationen des Zielempfangsendgeräts für die ersten Angabeinformationen aus dem Referenzkandidatenendgerät und dem mindestens einen Kandidatenendgerät des ersten Typs oder dem mindestens einen Kandidatenterminal des zweiten Typs, wobei
die ersten Zielinformationen mindestens eines umfassen von:

einem Zustand, der angibt, ob das Referenzkandidatenendgerät Empfangen der ersten Angabeinformationen unterstützt oder nicht unterstützt, oder
einem Zustand, der angibt, ob das mindestens eine Kandidatenendgerät des ersten Typs oder das mindestens eine Kandidatenendgerät des zweiten Typs Empfangen der ersten Angabeinformationen unterstützt oder nicht unterstützt.

2. Verfahren nach Anspruch 1, weiter umfassend:
Bestimmen durch das erste Endgerät anhand erster Informationen der Zustände, wobei die ersten Informationen mindestens eines umfassen von:
Sidelink Control Informations-, SCI-Konfigurationsinformationen eines Ressourcenpools oder Vorkonfigurationsinformationen.

3. Verfahren nach Anspruch 2, wobei über ein reserviertes Bit im SCI angegeben wird, ob das Kandidatenendgerät Empfangen der von anderen Endgeräten gesendeten ersten Angabeinformationen unterstützt oder nicht unterstützt.

4. Verfahren nach Anspruch 1, wobei Bestimmen anhand der ersten Zielinformation des Zielempfangsendgeräts für die ersten Angabeinformationen umfasst:

wenn das Referenzkandidatenendgerät Empfangen der ersten Angabeinformationen, die von dem Zielempfangssendgerät gesendet werden, nicht unterstützt und das mindestens eine Kandidatenendgerät des ersten Typs oder des mindestens einen Kandidatenendgeräts des zweiten Typs Empfangen der durch andere Endgeräte gesendeten ersten Angabeinformationen, unterstützt, Bestimmen aus dem mindestens einem Kandidatenendgerät des ersten Typs oder mindestens einem Kandidatenendgerät des zweiten Typs des Zielempfangsendgeräts für die ersten Angabeinformationen.

5. Endgerätevorrichtung (400), umfassend:

eine Verarbeitungseinheit (410), die konfiguriert ist, um anhand von Zielinformationen ein Zielempfangsendgerät für erste Angabeinformationen aus einer Vielzahl von Kandidatenendgeräten zu bestimmen, wobei die ersten Angabeinformationen Auftreten eines Ressourcenkonflikts zwischen Ressourcen, die von der Vielzahl von Kandidatenendgeräten reserviert werden, angeben; und
eine Kommunikationseinheit (420), die konfiguriert ist, um die ersten Angabeinformationen an das Zielempfangsendgerät zu senden,
**dadurch gekennzeichnet, dass** die Zielinformationen umfassen:

Zustände, die für jedes Kandidatenendgerät der Vielzahl von Kandidatenendgeräten angeben, ob das Kandidatenendgerät Empfangen der von anderen Endgeräten gesendeten ersten Angabeinformationen unterstützt oder nicht unterstützt,
wobei die Vielzahl von Kandidatenendgeräten ein Referenzkandidatenendgerät und mindestens ein Kandidatenendgerät eines ersten Typs oder mindestens ein Kandidatenendgerät eines zweiten Typs umfasst, eine vom Referenzkandidatenendgerät reservierte Ressource eine Zielempfangsressource der Endgerätevorrichtung ist und die reservierte Ressource dazu dient, dass die Endgerätevorrichtung Sidelink-Daten empfängt, die vom Referenzkandidatenendgerät über die reservierte Ressource gesendet werden; das mindestens eine Kandidatenendgerät des ersten Typs ein der Endgerätevorrichtung entsprechendes Zielsendeendgerät ist, das mindestens eine Kandidatenendgerät des zweiten Typs nicht das der Endgerätevorrichtung entsprechende Zielsendeendgerät ist und eine vom mindestens einen Kandidatenendgerät des ersten Typs oder dem mindestens einen Kandidatenendgerät des zweiten Typs reservierte Ressource sich mit der reservierten Ressource überschneidet,
wobei die Zielinformationen erste Zielinformationen umfassen und die Verarbeitungseinheit (410) speziell konfiguriert ist, um:

gemäß den ersten Zielinformationen das Zielempfangsendgerät für die ersten Angabeinformationen aus dem Referenzkandidatenendgerät und dem mindestens einen Kandidatenendgerät des ersten Typs oder dem mindestens einen Kandidatenterminal des zweiten Typs zu bestimmen, wobei die ersten Zielinformationen mindestens eines umfassen von:

einem Zustand, der angibt, ob das Referenzkandidatenendgerät Empfangen der ersten Angabeinformationen unterstützt oder nicht unterstützt, oder
einem Zustand, der angibt, ob das mindestens eine Kandidatenendgerät des ersten Typs oder das mindestens eine Kandidatenendgerät des zweiten Typs Empfangen der ersten Angabeinformationen unterstützt oder nicht unterstützt.

6. Endgerätevorrichtung (400) nach Anspruch 5, wobei die Verarbeitungseinheit (410) weiter konfiguriert ist, um:
anhand erster Informationen die Zustände zu bestimmen, wobei die ersten Informationen mindestens eines umfassen von:
Sidelink Control Informations-, SCI-Konfigurationsinformationen eines Ressourcenpools oder Vorkonfigurationsinformationen.

7. Endgerätevorrichtung (400) nach Anspruch 6, wobei über ein reserviertes Bit im SCI angegeben wird, ob das Kandidatenendgerät Empfangen der von anderen Endgeräten gesendeten ersten Angabeinformationen unterstützt oder nicht unterstützt.

8. Endgerätevorrichtung (400) nach Anspruch 5, wobei die Verarbeitungseinheit (410) weiter konfiguriert ist, um:
wenn das Referenzkandidatenendgerät Empfangen der ersten Angabeinformationen, die von dem Zielempfangssendgerät gesendet werden, nicht unterstützt und das mindestens eine Kandidatenendgerät des ersten Typs oder des mindestens einen Kandidatenendgeräts des zweiten Typs Empfangen der ersten Angabeinformationen, die durch andere Endgeräte gesendet werden, unterstützt, um aus dem mindestens einem Kandidatenendgerät des ersten Typs oder mindestens einem Kandidatenendgerät des zweiten Typs das Zielempfangsendgerät für die ersten Angabeinformationen zu bestimmen.

**9.** Computerlesbares Speichermedium, das darin gespeichert ein Computerprogramm aufweist, das, wenn es von einem drahtlosen Endgerät ausgeführt wird, das drahtlose Endgerät veranlasst, das Verfahren eines der Ansprüche 1 bis 4 auszuführen.

**Revendications**

**1.** Procédé de communication sans fil, comprenant :

la détermination (S110), par un premier terminal selon des informations cibles, d'un terminal de réception cible pour des premières informations d'indication parmi une pluralité de terminaux candidats, dans lequel les premières informations d'indication indiquent la survenue d'un conflit de ressources entre des ressources réservées par la pluralité de terminaux candidats ; et
l'envoi, par le premier terminal, des premières informations d'indication au terminal de réception cible, **caractérisé en ce que** les informations cibles comprennent :

des états indiquant, pour chaque terminal candidat parmi la pluralité de terminaux candidats, si le terminal candidat prend en charge, ou ne prend pas en charge, la réception des premières informations d'indication envoyées par d'autres terminaux,
dans lequel la pluralité de terminaux candidats comprend un terminal candidat de référence et au moins un terminal candidat d'un premier type ou au moins un terminal candidat d'un second type, une ressource réservée qui est réservée par le terminal candidat de référence, est une ressource de réception cible du premier terminal, et la ressource réservée permet au premier terminal de recevoir des données de liaison latérale envoyées par le terminal candidat de référence sur la ressource réservée ; le au moins un terminal candidat du premier type est un terminal d'envoi cible correspondant au premier terminal, le au moins un terminal candidat du second type n'est pas le terminal d'envoi cible correspondant au premier terminal, et une ressource réservée par le au moins un terminal candidat du premier type ou le au moins un terminal candidat du second type chevauche la ressource réservée.
dans lequel les informations cibles comprennent des premières informations cibles, et la détermination, par le premier terminal selon les informations cibles, du terminal de réception cible pour les premières informations d'indication parmi la pluralité de terminaux candidats comprend :

la détermination, selon les premières informations cibles, du terminal de réception cible pour les premières informations d'indication parmi le terminal candidat de référence et du au moins un terminal candidat du premier type ou du au moins un terminal candidat du second type, dans lequel
les premières informations cibles comprennent au moins un :

d'un état indiquant si le terminal candidat de référence prend en charge, ou ne prend pas en charge, la réception des premières informations d'indication, ou
d'un état indiquant si le au moins un terminal candidat du premier type ou le au moins un terminal candidat du second type prend en charge, ou ne prend pas en charge, la réception des premières informations d'indication.

**2.** Procédé selon la revendication 1, comprenant en outre :
la détermination, par le premier terminal selon des premières informations, desdits états, dans lequel les premières informations comprennent au moins une :
d'informations de commande de liaison latérale, SCI, d'informations de configuration d'un groupe de ressources ou d'informations de préconfiguration.

**3.** Procédé selon la revendication 2, dans lequel, si le terminal candidat prend en charge, ou ne prend pas en charge, la réception des premières informations d'indication envoyées par d'autres terminaux est indiqué par le terminal candidat au moyen d'un bit réservé dans les SCI.

**4.** Procédé selon la revendication 1, dans lequel la détermination, selon les premières informations cibles, du terminal de réception cible pour les premières informations d'indication comprend :
si le terminal candidat de référence ne prend pas en charge la réception des premières informations d'indication envoyées par le terminal de réception cible, et si le au moins un terminal candidat du premier type ou le au moins un terminal candidat du second type prend en charge la réception des premières informations d'indication envoyées par d'autres terminaux, la détermination, parmi le au moins un terminal candidat du premier type ou le au moins un terminal candidat du second type, du terminal de réception cible pour les premières informations d'indication.

5. Dispositif terminal (400), comprenant :

une unité de traitement (410), configurée pour déterminer, selon des informations cibles, un terminal de réception cible pour des premières informations d'indication parmi une pluralité de terminaux candidats, dans lequel les premières informations d'indication indiquent la survenue d'un conflit de ressources entre des ressources réservées par la pluralité de terminaux candidats ; et
une unité de communication (420), configurée pour envoyer les premières informations d'indication au terminal de réception cible,
**caractérisé en ce que** les informations cibles comprennent :

des états indiquant, pour chaque terminal candidat de la pluralité de terminaux candidats, si le terminal candidat prend en charge, ou ne prend pas en charge, la réception des premières informations d'indication envoyées par d'autres terminaux,
dans lequel la pluralité de terminaux candidats comprend un terminal candidat de référence et au moins un terminal candidat d'un premier type ou au moins un terminal candidat d'un second type ; une ressource réservée qui est réservée par le terminal candidat de référence est une ressource de réception cible du dispositif terminal, et la ressource réservée permet au dispositif terminal de recevoir des données de liaison latérale envoyées par le terminal candidat de référence sur la ressource réservée ; le au moins un terminal candidat du premier type est un terminal d'envoi cible correspondant au dispositif terminal, le au moins un terminal candidat du second type n'est pas le terminal d'envoi cible correspondant au dispositif terminal, et une ressource réservée par le au moins un terminal candidat du premier type ou le au moins un terminal candidat du second type chevauche la ressource réservée.
dans lequel les informations cibles comprennent des premières informations cibles, et l'unité de traitement (410) est spécifiquement configurée pour :

déterminer, selon les premières informations cibles, le terminal de réception cible pour les premières informations d'indication parmi le terminal candidat de référence et le au moins un terminal candidat du premier type ou le au moins un terminal candidat du second type, dans lequel
les premières informations cibles comprennent au moins un :

d'un état indiquant si le terminal candidat de référence prend en charge, ou ne prend pas en charge, la réception des premières informations d'indication, ou
d'un état indiquant si le au moins un terminal candidat du premier type ou le au moins un terminal candidat du second type prend en charge, ou ne prend pas en charge, la réception des premières informations d'indication.

6. Dispositif terminal (400) selon la revendication 5, dans lequel l'unité de traitement (410) est en outre configurée pour :
déterminer, selon des premières informations, lesdits états, dans lequel premières informations comprennent au moins une :
d'informations de commande de liaison latérale, SCI, d'informations de configuration d'un groupe de ressources ou d'informations de préconfiguration.

7. Dispositif terminal (400) selon la revendication 6, dans lequel, si le terminal candidat prend en charge ou ne prend pas en charge la réception des premières informations d'indication envoyées par d'autres terminaux est indiqué par le terminal candidat au moyen d'un bit réservé dans les SCI.

8. Dispositif terminal (400) selon la revendication 5, dans lequel l'unité de traitement (410) est en outre configurée pour :
si le terminal candidat de référence ne prend pas en charge la réception des premières informations d'indication envoyées par le terminal de réception cible, et si le au moins un terminal candidat du premier type ou le au moins un terminal candidat du second type prend en charge la réception des premières informations d'indication envoyées par d'autres terminaux, déterminer, parmi le au moins un terminal candidat du premier type ou le au moins un terminal

26

candidat du second type, le terminal de réception cible pour les premières informations d'indication.

9. Support de stockage lisible par ordinateur sur lequel est stocké un programme d'ordinateur qui, lorsqu'il est exécuté par un terminal sans fil, amène le terminal sans fil à réaliser le procédé selon l'une quelconque des revendications 1 à 4.

**FIG. 1**

**FIG. 2**

**FIG. 3**

**FIG. 4**

Group

UE2

UE1

UE3

UE4

**FIG. 5**

UE2

UE6

UE3

UE1

UE5

UE4

**FIG. 6**

| AGC | | | | DMRS and second -stage SCI | Second-stage SCI | | PSSCH (Data portion) | | | DMRS | | GP |
|---|---|---|---|---|---|---|---|---|---|---|---|---|
| | PSCCH | | | | | | | | | | | |

| 0 | 1 | 2 | 3 | 4 | 5 | 6 | 7 | 8 | 9 | 10 | 11 | 12 | 13 |

**FIG. 7**

FIG. 8

FIG. 9

100

A first terminal determines, according to target information, a target receiving terminal for first indication information among multiple candidate terminals, where the first indication information is used for indicating occurrence of a resource conflict, the multiple candidate terminals include a reference candidate terminal and a first candidate terminal group, a resource reserved by the reference candidate terminal is a target receiving resource of the first terminal, the first candidate terminal group includes at least one candidate terminal, and the resource reserved by the at least one candidate terminal in the first candidate terminal group overlaps with the resource reserved by the reference candidate terminal. The target information includes at least one of: a number of candidate terminals of a first type in the first candidate terminal group, where the candidate terminals of the first type take the first terminal as a target receiving terminal; states in which the plurality of candidate terminals receive the first indication information; signal qualities of the plurality of candidate terminals; or priorities of data to be sent by the multiple candidate terminals

S110

**FIG. 10**

```
              ┌──────────────┐
              │     UE-D      │
              │  Non-target   │
              │sending terminal│
              └──────┬───────┘
                     │
┌──────────────┐  ┌──────┐  ┌──────────────┐
│     UE-C     │  │      │  │     UE-B     │
│Target sending│→ │ UE-A │ ←│Target sending│
│   terminal   │  │      │  │   terminal   │
└──────────────┘  └──────┘  └──────────────┘
                     │
              ┌──────┴───────┐
              │     UE-E      │
              │  Non-target   │
              │sending terminal│
              └──────────────┘
```

**FIG. 11**

Terminal Device 400

Processing Unit 410

Communicating unit 420

**FIG. 12**

Communication device 600

Memory 620

Processor 610

Transceiver 630

**FIG. 13**

Chip 700

Input interface 730

Processor 710

Memory 720

Output interface 740

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020107349 A1